(19) Europäisches Patentamt
European Patent Office
Office européen des brevets

(11) EP 4 797 870 A1

(12) **EUROPEAN PATENT APPLICATION**
published in accordance with Art. 153(4) EPC

(43) Date of publication:
**26.08.2026 Bulletin 2026/35**

(21) Application number: **24879452.1**

(22) Date of filing: **05.09.2024**

(51) International Patent Classification (IPC):
***H05B 6/12*** (2006.01) ***C03C 17/04*** (2006.01)
***C03C 17/34*** (2006.01) ***C03C 17/42*** (2006.01)
***F24C 15/10*** (2006.01)

(52) Cooperative Patent Classification (CPC):
**C03C 17/04; C03C 17/34; C03C 17/42; F24C 15/10; H05B 6/12**

(86) International application number:
**PCT/JP2024/031885**

(87) International publication number:
**WO 2025/084025 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.10.2023 JP 2023178542**
**08.11.2023 JP 2023190778**
**29.02.2024 JP 2024029591**
**14.05.2024 JP 2024078385**

(71) Applicant: **Nippon Electric Glass Co., Ltd.**
**Otsu-shi, Shiga 520-8639 (JP)**

(72) Inventors:
- **FUKUI Etsuji**
  **Otsu-shi Shiga 520-8639 (JP)**
- **UEHIRA KIZU Misaki**
  **Otsu-shi Shiga 520-8639 (JP)**

(74) Representative: **Tetzner, Michael**
**Tetzner & Partner mbB**
**Patent- und Rechtsanwälte**
**Van-Gogh-Strasse 3**
**81479 München (DE)**

(54) **COOKER TOP PLATE AND MANUFACTURING METHOD FOR COOKER TOP PLATE**

(57) Provided are: a cooker top plate that has high stain resistance and high scratch resistance while achieving a highly matte appearance; and a method for manufacturing the cooker top plate. The cooker top plate includes: a glass substrate having a cooking surface on which a cooking utensil is to be put and an back surface on an opposite side to the cooking surface; and a coating layer disposed on the cooking surface side of the glass substrate, wherein the coating layer contains an inorganic layer, and a surface of the coating layer has a root-mean-square roughness Rq of 0.1 μm to 1 μm.

[FIG. 1]

1
5
2 a
3 (4)
2
2 b

EP 4 797 870 A1

## Description

[Technical Field]

The present invention relates to cooker top plates and methods for manufacturing cooker top plates.

[Background Art]

A cooker top plate is provided at the top of an electromagnetic cooker, a radiant heater cooker, a gas cooker or the like. Generally, the cooker top plate is provided with a clear or opaque glass substrate having: a cooking surface on which a cooking utensil is to be put; and a back surface on the side opposite to the cooking surface. Furthermore, a coating layer may be further provided on the cooking surface of the glass substrate in order to increase the design quality of the cooker top plate.

Recently, with increasing interest in the quality of design, there have been demands for cooker top plates the cooking surfaces of which have a matte appearance. For example, Patent Literature 1 below describes that a matte appearance of a cooker top plate can be achieved by layering on a cooking surface of a glass substrate made of low-expansion crystallized glass a high-reflection film having a higher reflectance than the glass substrate and further layering on the high-reflection film a painted decorative glass layer. Patent Literature 2 below describes that a matte appearance of a cooker top plate can be achieved by layering on a glass substrate a reflection film having a lower reflectance than the glass substrate.

[Citation List]

[Patent Literature]

[PTL 1] JP-A-2008-190846
[PTL 2] JP-A-2008-290917

[Summary of Invention]

[Technical Problem]

However, in Patent Literature 1, because the exposed painted decorative glass layer contains glass and a white pigment, the white pigment may interfere with the flow of the glass during firing and, thus, the arithmetic mean roughness Ra of the painted decorative glass layer tends to become large. As a result, when the cooking utensil, such as a pot, rubs against the painted decorative glass layer, the pot bottom may be scraped and the coating or the like thereon is thus likely to stick as dirt to the painted decorative glass layer or the painted decorative glass layer may be scraped and is thus likely to be scratched. Patent Literature 2 describes that a painted decorative glass layer may be made only of a glass composition or may contain, in addition to the glass composition, an inorganic pigment or the like for coloration. However, in both the case where it is made only of a glass composition and the case where it further contains an inorganic pigment or the like, when the cooking utensil, such as a pot, rubs against the painted decorative glass layer, the pot bottom may be scraped and the coating or the like thereon is thus likely to stick as dirt to the painted decorative glass layer or the painted decorative glass layer may be scraped and is thus likely to be scratched.

Therefore, it is difficult to increase the stain resistance and scratch resistance while achieving a matte appearance. In the present invention, the stain resistance refers to the resistance to that, upon contact of a cooking utensil, such as a pot, with the cooker top plate, coating or the like on the cooking utensil is peeled off and sticks as dirt to the cooker top plate, and the scratch resistance refers to the resistance to that, upon contact of a cooking utensil, such as a pot, with the cooker top plate, the surface of the cooker top plate is scraped and thus scratched.

In view of the above, the present invention is aimed at providing: a cooker top plate that has high stain resistance and high scratch resistance while achieving a highly matte appearance; and a method for manufacturing the cooker top plate.

[Solution to Problem]

As a result of intensive studies, the inventors have found that by controlling the surface shape of a coating layer provided on a cooking surface of a glass substrate, a cooker top plate having high stain resistance and high scratch

resistance while achieving a highly matte appearance and a method for manufacturing the cooker top plate can be provided.

A cooker top plate of aspect 1 in the present invention includes: a glass substrate having a cooking surface on which a cooking utensil is to be put and a back surface on an opposite side to the cooking surface; and a coating layer disposed on the cooking surface side of the glass substrate, wherein the coating layer contains an inorganic layer and a surface of the coating layer has a root-mean-square roughness Rq of 0.1 μm to 1 μm.

A cooker top plate of aspect 2 is the cooker top plate according to aspect 1, wherein the inorganic layer preferably contains inorganic beads.

A cooker top plate of aspect 3 is the cooker top plate according to aspect 1 or 2, wherein the surface of the coating layer preferably has an arithmetic mean roughness Ra of 0.22 μm to 0.9 μm.

A cooker top plate of aspect 4 is the cooker top plate according to aspect 2 or 3, wherein the inorganic beads preferably contain at least one type of inorganic beads selected from the group consisting of glass beads, alumina beads, silica beads, zirconia beads, quartz beads, feldspar beads, zeolite beads, corundum beads, and zircon beads.

A cooker top plate of aspect 5 is the cooker top plate according to any one of aspects 2 to 4, wherein the inorganic beads are preferably kept from protruding from the surface of the coating layer.

A cooker top plate of aspect 6 is the cooker top plate according to any one of aspects 2 to 5, wherein the inorganic layer preferably contains a glass matrix and a difference in softening point from the inorganic beads to the glass matrix is preferably not more than 300°C.

A cooker top plate according to aspect 7 is the cooker top plate according to any one of aspects 1 to 6, wherein the inorganic layer preferably contains a glass matrix having a different refractive index from the inorganic beads.

A cooker top plate of aspect 8 is the cooker top plate according to any one of aspects 1 to 7, wherein the inorganic layer is preferably free of color pigment.

A cooker top plate of aspect 9 is the cooker top plate according to any one of aspects 1 to 8, wherein the coating layer preferably further contains an antifouling layer and/or a protective layer provided on the inorganic layer.

A cooker top plate of aspect 10 is the cooker top plate according to any one of aspects 1 to 9, wherein the surface of the coating layer preferably has a 20° gloss value of not more than 38.

A cooker top plate of aspect 11 is the cooker top plate according to any one of aspects 1 to 10, wherein the surface of the coating layer preferably has a 60° gloss value of not more than 70.

A cooker top plate of aspect 12 in the present invention includes a glass substrate having a cooking surface on which a cooking utensil is to be put and a back surface on an opposite side to the cooking surface, wherein the cooking surface has a root-mean-square roughness Rq of 0.25 μm to 0.95 μm.

A method for manufacturing a cooker top plate of aspect 13 in the present invention is a method for manufacturing the cooker top plate structured according to any one of aspects 1 to 11 and includes the step of applying a paste for forming an inorganic layer, the paste containing inorganic beads, to a surface of a glass substrate and firing the paste to form a coating layer containing an inorganic layer on the surface of the glass substrate, wherein a surface of the coating layer has a root-mean-square roughness Rq of 0.1 μm to 1 μm.

[Advantageous Effects of Invention]

The present invention enables provision of: a cooker top plate that has high stain resistance and high scratch resistance while achieving a highly matte appearance; and a method for manufacturing the cooker top plate.

[Brief Description of Drawings]

[Fig. 1]

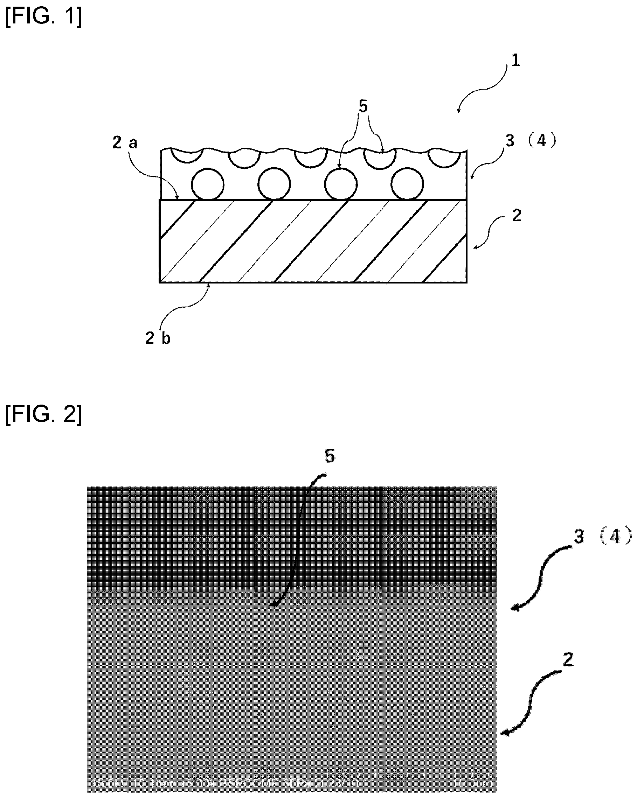

Fig. 1 is a schematic cross-sectional view showing a cooker top plate according to an embodiment of the present invention.

[Fig. 2]
Fig. 2 is an image of a cross section of a cooker top plate obtained in Example 2 of the present invention, the image having been taken by a scanning electron microscope (SEM) (magnification: 5000-fold).

[Fig. 3]

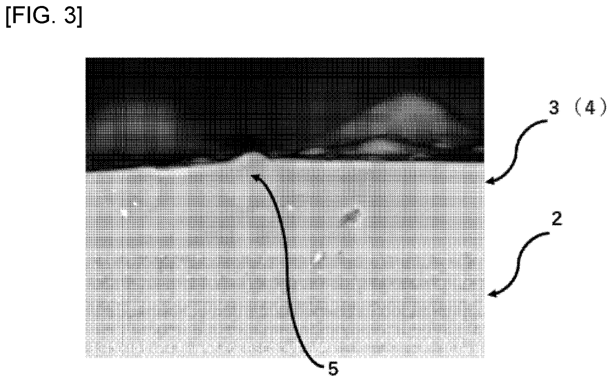

Fig. 3 is an image of a cross section of a cooker top plate obtained in Example 10 of the present invention, the image having been taken by a scanning electron microscope (SEM) (magnification: 5000-fold).

[Description of Embodiments]

Hereinafter, a description will be given of a preferred embodiment. However, the following embodiment is merely illustrative and the present invention is not limited to the following embodiment. Throughout the drawings, members having substantially the same functions may be referred to by the same reference characters.

Herein, "cooker top plate" may be abbreviated as "top plate".

A cooker top plate 1 shown in Fig. 1 includes a glass substrate 2. The glass substrate 2 has a cooking surface 2a and a back surface 2b. The cooking surface 2a and the back surface 2b are surfaces opposed to each other. The cooking surface 2a is a surface located on the side of the substrate where a cooking utensil, such as a pot or a frying pan, is to be put. The back surface 2b is a surface located toward the interior of the cooker and facing toward a light source and a heater. Therefore, the cooking surface 2a and the back surface 2b are front and back sides of the same substrate. A coating layer 3 is disposed on the cooking surface 2a of the glass substrate 2. The coating layer 3 contains an inorganic layer 4. In other words, the cooking surface 2a of the glass substrate 2 adjoins the coating layer 3 and the cooking surface 2a of the glass substrate 2 adjoins the inorganic layer 4.

Hereinafter, a description will be given of details of the members and layers constituting the top plate 1.

The type of the glass substrate 2 is not particularly limited. For example, the glass substrate 2 may be a white glass substrate or a clear glass substrate. Herein, "clear" of the glass substrate means that the light transmittance in a visible wavelength range of 450 nm to 700 nm is 70% or more.

The top plate 1 undergoes heating and cooling repeatedly. Therefore, the glass substrate 2 preferably has high thermal shock resistance and a low coefficient of thermal expansion. Specifically, the softening temperature of the glass substrate 2 is preferably not lower than 700°C and more preferably not lower than 750°C. Furthermore, the average coefficient of linear thermal expansion of the glass substrate 2 at 30°C to 750°C is preferably in a range of $-10 \times 10^{-7}$/°C to $+60 \times 10^{-7}$/°C, more preferably in a range of $-10 \times 10^{-7}$/°C to $+50 \times 10^{-7}$/°C, and even more preferably in a range of $-10 \times 10^{-7}$/°C to $+40 \times 10^{-7}$/°C. Therefore, the glass substrate 2 is preferably made of a low-expansion glass or crystallized glass having a high glass transition temperature. Specific examples of the low-expansion crystallized glass include "N-11" and "N-0" manufactured by Nippon Electric Glass Co., Ltd., which are LAS ($Li_2O$-$Al_2O_3$-$SiO_2$)-based crystallized glasses. A borosilicate glass substrate or the like may be used as the glass substrate 2.

The thickness of the glass substrate 2 is not particularly limited. The thickness of the glass substrate 2 can be appropriately selected according to the output temperature, structure or so on of the cooker. The thickness of the glass substrate 2 may be, for example, about 2 mm to about 6 mm.

The arithmetic mean roughness Ra of the cooking surface 2a of the glass substrate 2 before the coating layer 3 is formed thereon is preferably not more than 1.5 μm, more preferably not more than 1.0 μm, even more preferably not more than 0.8 μm, and particularly preferably not more than 0.5 μm. If the arithmetic mean roughness Ra of the cooking surface 2a is larger than the above upper limit, the root-mean-square roughness Rq and arithmetic mean roughness Ra of the surface of the coating layer 3 when the coating layer 3 is subsequently formed are likely to be large and a cooking utensil is thus easily caught on the surface asperities of the coating layer 3, which causes metal, paint or the like at the bottom of the cooking utensil to be scraped and stick as dirt to the coating layer 3 or causes raised portions of the surface of the coating layer 3 to be scraped off to make the coating layer 3 scratched, and is therefore unfavorable. The above lower limit of the arithmetic mean roughness Ra is not particularly limited.

The coating layer 3 is disposed on the cooking surface 2a of the glass substrate 2. The coating layer 3 contains an inorganic layer 4. Specifically, the coating layer 3 has a single-layered structure containing a single inorganic layer 4. Without impairing the matte appearance, the stain resistance, and the scratch resistance that the present invention aims at achieving, the coating layer 3 may further contain, on the inorganic layer 4, one or more layers other than the inorganic layer 4 and may have a double-layered structure or a structure consisting of three or more layers. In these cases, the layers may have different content ratios among constituents or the same content ratio among constituents. The details of the case where the coating layer 3 has a structure of two or more layers will be described later. In the following description, when the coating layer 3 consists only of the inorganic layer 4, the "surface of the coating layer 3" refers to the "surface of the inorganic layer 4". When one or more layers other than the inorganic layer 4 are further formed on the inorganic layer 4, the "surface of the coating layer 3" refers to the "outermost surface of the layers other than the inorganic layer 4.

The surface of the coating layer 3 has a root-mean-square roughness Rq of 0.1 μm to 1 μm. The root-mean-square roughness Rq of the surface of the coating layer 3 is more preferably not less than 0.26 μm, even more preferably not less than 0.32 μm, particularly preferably not less than 0.38 μm, not more than 1 μm, more preferably not more than 0.75 μm, even more preferably not more than 0.6 μm, and particularly preferably not more than 0.5 μm. When the root-mean-square roughness Rq is not more than the above upper limit and not less than the above lower limit, the contact area between a cooking utensil and the coating layer 3 upon rubbing can be adequately controlled and, therefore, the frictional force produced between the cooking utensil and the coating layer 3 can be easily reduced, which enables the stain resistance and the scratch resistance to be easily increased and enables the matte appearance to be easily enhanced. If the root-mean-square roughness Rq of the surface of the coating layer 3 is smaller than the above lower limit, the contact

area between the cooking utensil and the coating layer 3 becomes excessively large and, therefore, the frictional force produced between them becomes large, which decreases the stain resistance and the scratch resistance and makes it difficult to enhance the matte appearance.

The arithmetic mean roughness Ra of the surface of the coating layer 3 is preferably not more than 0.9 μm, more preferably not more than 0.5 μm, even more preferably not more than 0.4 μm, and particularly preferably not more than 0.35 μm. The lower limit of the arithmetic mean roughness Ra is preferably not less than 0.22 μm, more preferably not less than 0.25 μm, and even more preferably not less than 0.29 μm. If the arithmetic mean roughness Ra is more than the above upper limit, upon rubbing of a cooking utensil, such as a pot, on the coating layer 3, the cooking utensil is easily caught on the surface asperities of the coating layer 3, which causes metal, paint or the like at the bottom of the cooking utensil to be scraped and stick as dirt to the coating layer 3 or causes raised portions of the surface of the coating layer 3 to be scraped off to make the coating layer 3 scratched, and is therefore unfavorable. If the arithmetic mean roughness Ra of the surface of the coating layer 3 is smaller than the above lower limit, the contact area between the cooking utensil and the coating layer 3 becomes excessively large and, therefore, the frictional force produced between them becomes large, which decreases the stain resistance and the scratch resistance, makes it difficult to enhance the matte appearance, and is therefore unfavorable.

The arithmetic mean roughness Ra and the root-mean-square roughness Rq can be measured using Mitutoyo SJ-210 in a method based on JIS B0601:2001 and under the following conditions and settings.

Measurement speed: 0.5 mm/S
Cut-off value λc: 0.7 mm, λs: 2.5 mm
Number of sampling sections: five
Gaussian filter

The light transmittance of the glass substrate 2 (the top plate 1) provided with the coating layer 3 at a wavelength of 580 nm is preferably not less than 75%, more preferably not less than 80%, and even more preferably not less than 81%. When the light transmittance of the glass substrate is high (for example, the light transmittance thereof at a wavelength of 580 nm is approximately 86%), the value of the light transmittance varies depending on the composition of the coating layer 3. When the light transmittance of the glass substrate 2 provided with the coating layer 3 is not less than the above lower limit, in the case where the glass substrate 2 includes a portion where the coating layer 3 is formed and a portion where the coating layer 3 is not formed, a color difference between both the portions is less likely to be generated and, therefore, the design quality of the entire top plate 1 can be increased while a highly matte appearance can be achieved. The upper limit of the light transmittance of the glass substrate 2 provided with the coating layer 3 is not particularly limited, but may be, for example, not more than 90%. The light transmittance was determined from the intensity ($I_0$) of incident light allowed to enter the glass substrate 2 from a light source provided facing the coating layer 3 and the intensity (I) of light exited from the glass substrate 2 (the back surface 2b thereof).

The thickness of the inorganic layer 4 is preferably 0.1 to 20 μm, more preferably 1 to 10 μm, even more preferably 2 to 5 μm, and particularly preferably 3 to 4 μm. When the thickness is not more than the upper lower limit and not less than the above lower limit, the surface shape of the coating layer 3 can be easily adjusted to a desired degree by the glass beads and, therefore, the stain resistance and the scratch resistance can be easily increased while the matte appearance can be enhanced.

The Mohs hardness of the surface of the coating layer 3 is preferably 4 to 7 and more preferably 5 to 6. If the Mohs hardness of the surface of the coating layer 3 is more than the above upper limit, metal, paint or the like at the bottom of a cooking utensil is likely to be scraped by the surface of the coating layer 3 and, therefore, the stain resistance of the coating layer 3 is likely to decrease. On the other hand, if the Mohs hardness of the surface of the coating layer 3 is less than the above lower limit, the surface of the coating layer 3 is likely to be scratched by a cooking utensil or the like and, therefore, the scratch resistance of the coating layer 3 is likely to decrease. The Mohs hardness of the surface of the coating layer 3 can be measured with any known Mohs scale and, for example, a Mohs scale (MH-10R) manufactured by Narika Corporation can be used.

Hereinafter, a description will be given of components and so on contained in the inorganic layer 4.

The inorganic layer 4 contains a glass matrix as a matrix component. The glass matrix is made of, for example, a glass frit. Examples of the glass composition of the glass matrix (the glass frit) include borosilicate-based glasses, aluminoborosilicate-based glasses, silicate-based glasses containing at least one of an alkali metal component and an alkaline earth metal component, and phosphate-based glasses containing zinc and aluminum. Examples of the glass frit that can be used include "Frit NPF", "Frit NPF10", and "Fine-Grained Frit NPF" all manufactured by Nippon Electric Glass Co., Ltd. Among various types of glass frits, a single type of glass frit may be used or two or more types of glass frits may be used in combination.

The content of the glass matrix in the inorganic layer 4 is preferably not less than 55% by mass, more preferably more than 55% by mass, even more preferably not less than 65% by mass, still even more preferably not less than 70% by

mass, preferably not more than 99% by mass, more preferably not more than 90% by mass, and even more preferably not more than 85% by mass. When the content of the glass matrix is not less than the above lower limit and not more than the above upper limit, the arithmetic mean roughness Ra and the root-mean-square roughness Rq of the surface of the coating layer 3 can be easily controlled within suitable ranges, which enables the stain resistance and the scratch resistance to be easily increased and enables the matte appearance to be easily enhanced.

The inorganic layer 4 contains inorganic beads. In other words, the coating layer 3 contains inorganic beads. Thus, approximately spherical inorganic beads are scattered in the inorganic layer 4, which enables light incident on the inorganic layer 4 to be easily scattered. In addition, the surface shape of the coating layer 3 can be easily adjusted to a desired degree. As a result, the 20° gloss value and the 60° gloss value of the surface of the coating layer 3 can be easily decreased, which enables a highly matte appearance to be achieved and enables the stain resistance and the scratch resistance to be easily increased. The inorganic beads preferably contain at least one type of beads selected from the group consisting of glass beads, alumina beads, silica beads, zirconia beads, quartz beads, feldspar beads, zeolite beads, corundum beads, and zircon beads. Among them, glass beads are particularly preferably contained in the inorganic beads. Thus, a highly matte appearance can be achieved and the stain resistance and the scratch resistance can be easily increased. Quartz beads, feldspar beads, zeolite beads, corundum beads, and zircon beads can be obtained by grinding natural minerals or artificial minerals, such as quartz, feldspar, zeolite, corundum, and zircon, which are raw materials of the above beads.

Examples of the glass composition of the glass beads include borosilicate-based glasses, aluminoborosilicate-based glasses, silicate-based glasses containing at least one of an alkali metal component and an alkaline earth metal component, and phosphate-based glasses containing zinc and aluminum.

The inorganic layer 4 containing inorganic beads can be confirmed using a scanning electron microscope or the like.

The inorganic beads are preferably kept from protruding from the surface of the coating layer 3. If the inorganic beads are protruding from the surface of the coating layer 3, the protruding inorganic beads cause the paint at the bottom of a pot to be easily peeled off or may be easily scraped off, which makes it impossible to achieve a desired stain resistance and a desired scratch resistance. In the present invention, "the inorganic beads are kept from protruding" means that the glass matrix is approximately flush with the inorganic beads on the surface of the coating layer 3. However, unintentionally and inevitably protruding inorganic beads may be slightly present on the surface of the coating layer 3, in which case the area occupancy by inorganic beads protruding from the surface of the coating layer 3 in the surface area of the coating layer 3 is not more than 5%, not more than 3% or not more than 1%. Whether or not the inorganic beads are protruding on the surface can be confirmed by a scanning electron microscope.

The inorganic layer 4 preferably contains: glass beads; and a glass matrix made of a glass frit, wherein the glass beads preferably have a different softening point from the matrix glass. As to whether the glass beads or the glass matrix has a higher softening point, the softening point of the glass beads is preferably higher than that of the glass matrix. Thus, the inorganic beads can be easily partially softened in the vicinity of the surface of the coating layer 3 at the baking temperature of the inorganic layer 4. As a result, the inorganic beads are less likely to protrude from the surface of the coating layer 3, which enables the surface shape of the coating layer 3 to be easily controlled to a desired degree. Therefore, the stain resistance and the scratch resistance can be easily increased.

The difference in softening point between the inorganic beads and the glass matrix is preferably not more than 500°C, more preferably not more than 200°C, and particularly preferably not more than 100°C. Thus, the inorganic beads can be easily partially softened in the vicinity of the surface of the coating layer 3 at the baking temperature of the inorganic layer 4. As a result, the inorganic beads are less likely to protrude from the surface of the coating layer 3, which enables the surface shape of the coating layer 3 to be easily controlled to a desired degree. Therefore, the stain resistance and the scratch resistance can be easily increased. In view of the above, for example, the inorganic beads are preferably made of an aluminoborosilicate-based glass and the matrix glass is preferably made of a borosilicate-based glass having a lower softening point than the glass constituting the inorganic beads.

As to whether the softening point of the inorganic beads or the baking temperature of the inorganic layer 4 is higher, the softening point of the inorganic beads is preferably higher than the baking temperature of the inorganic layer 4. The difference between the softening point of the inorganic beads and the baking temperature of the inorganic layer 4 is preferably not more than 200°C, more preferably not more than 150°C, and particularly preferably not more than 100°C. Thus, the inorganic beads are less likely to protrude from the surface of the coating layer 3 at the baking temperature of the inorganic layer 4, which enables the surface shape of the coating layer 3 to be easily controlled to a desired degree. Therefore, the stain resistance and the scratch resistance can be easily increased.

The softening point of the inorganic beads is, for example, preferably not higher than 1500°C, more preferably not higher than 1000°C, even more preferably not higher than 950°C, and particularly preferably not higher than 900°C. Thus, the inorganic beads are less likely to protrude from the surface of the coating layer 3 at the baking temperature of the inorganic layer 4, which enables the surface shape of the coating layer 3 to be easily controlled to a desired degree. Therefore, the stain resistance and the scratch resistance can be easily increased.

The inorganic beads preferably have a different refractive index from the glass matrix. Thus, light incident on the coating layer 3 can be easily scattered, which enables a highly matte appearance to be easily achieved.

The average particle diameter of the inorganic beads is preferably 1 μm to 9 μm, more preferably 2 to 8 μm, even more preferably 2.5 μm to 7 μm, and particularly preferably 3 to 6.5. When the average particle diameter of the inorganic beads is not more than the above upper limit and not less than the above lower limit, the surface shape of the coating layer 3 can be easily adjusted to a desired degree and, therefore, the stain resistance and the scratch resistance can be easily increased while the matte appearance can be enhanced.

The content of the inorganic beads in the inorganic layer 4 is preferably not less than 1% by mass, more preferably not less than 5% by mass, even more preferably not less than 11% by mass, particularly preferably not less than 15% by mass, preferably less than 45% by mass, more preferably not more than 40% by mass, even more preferably not more than 35% by mass, and particularly preferably not more than 30% by mass. When the content of the inorganic beads is not less than the above lower limit and not more than the above upper limit, the arithmetic mean roughness Ra and the root-mean-square roughness Rq of the surface of the coating layer 3 can be easily controlled within suitable ranges, which enables the stain resistance and the scratch resistance to be easily increased and enables the matte appearance to be easily enhanced.

The content of the glass beads in the inorganic layer 4 is preferably not less than 1% by mass, more preferably not less than 5% by mass, even more preferably not less than 11% by mass, particularly preferably not less than 15% by mass, preferably not more than 60% by mass, more preferably less than 45% by mass, even more preferably not more than 40% by mass, still even more preferably not more than 35% by mass, and particularly preferably not more than 30% by mass. When the content of the glass beads is not less than the above lower limit and not more than the above upper limit, the arithmetic mean roughness Ra and the root-mean-square roughness Rq of the surface of the coating layer 3 can be easily controlled within suitable ranges, which enables the stain resistance and the scratch resistance to be easily increased and enables the matte appearance to be easily enhanced.

The mass ratio between the content of the inorganic beads and the content of the glass matrix in the inorganic layer 4 (content of inorganic beads to content of glass matrix) is preferably not less than 0.01, more preferably not less than 0.05, even more preferably not less than 0.1, particularly preferably not less than 0.2, preferably less than 0.81, more preferably not more than 0.7, even more preferably not more than 0.6, and particularly preferably not more than 0.4. When the above mass ratio is not less than the above lower limit and not more than the above upper limit, the arithmetic mean roughness Ra and the root-mean-square roughness Rq of the surface of the coating layer 3 can be easily controlled within suitable ranges, which enables the stain resistance and the scratch resistance to be easily increased and enables the matte appearance to be easily enhanced.

The mass ratio between the content of the glass beads and the content of the glass matrix in the inorganic layer 4 (content of glass beads to content of glass matrix) is preferably not less than 0.01, more preferably not less than 0.05, even more preferably not less than 0.1, particularly preferably not less than 0.2, preferably less than 0.81, more preferably not more than 0.7, even more preferably not more than 0.6, and particularly preferably not more than 0.4. When the above mass ratio is not less than the above lower limit and not more than the above upper limit, the arithmetic mean roughness Ra and the root-mean-square roughness Rq of the surface of the coating layer 3 can be easily controlled within suitable ranges, which enables the stain resistance and the scratch resistance to be easily increased and enables the matte appearance to be easily enhanced.

In addition to the inorganic beads, beads containing an organic group may be added to the inorganic layer 4. However, the beads containing an organic group tend to be present in a state where they are protruding from the coating layer 3 at the baking temperature of the glass frit, which is unfavorable. Examples of the beads containing an organic group include phenyl polysiloxane, methyl polysiloxane, methyl phenyl polysiloxane, and organo-functionalized polysiloxane.

The inorganic layer 4 is preferably free of color pigment. The inorganic layer 4 is preferably free of extender pigment. Thus, any component that does not soften at the firing temperature of the glass and strongly interferes with the flow of the glass is not present in the inorganic layer 4, which enables the surface shape of the coating layer 3 to be easily controlled to a desired degree and enables the stain resistance and the scratch resistance to be easily increased. In addition, a color difference between a portion where the inorganic layer 4 is formed and a portion where the inorganic layer 4 is not formed is less likely to be generated and, therefore, the design quality of the entire top plate 1 can be increased while a highly matte appearance can be achieved. Without impairing the matte appearance, the stain resistance, and the scratch resistance that the present invention aims at achieving, the inorganic layer 4 may contain a color pigment and may contain an extender pigment. In this case, the content of the color pigment and the extender pigment in the inorganic layer 4 is preferably not more than 5% by mass and more preferably not more than 1% by mass.

The type of the color pigment is not particularly limited so long as it is a colored inorganic substance. Examples of the color pigment include: white pigment powders, such as $TiO_2$ powder, $ZrO_2$ powder, and $ZrSiO_4$ powder; blue inorganic pigment powders containing Co; green inorganic pigment powders containing Co; Ti-Sb-Cr-based or Ti-Ni-based yellow inorganic pigment powders, Co-Si-based red inorganic pigment powders; brown inorganic pigment powders containing Fe; and black inorganic pigment powders containing Cu. The color pigment may be used as a single type or in combination

of two or more types.

Examples of the blue inorganic pigment powders containing Co include Co-Al-based and Co-Al-Ti-based inorganic pigment powders. An example of the Co-Al-based inorganic pigment powders is $CoAl_2O_4$ powder. An example of the Co-Al-Ti-based inorganic pigment powders is $CoAl_2O_4$-$TiO_2$-$Li_2O$ powder.

Examples of the green inorganic pigment powders containing Co include Co-Al-Cr-based and Co-Ni-Ti-Zn-based inorganic pigment powders. An example of the Co-Al-Cr-based inorganic pigment powders is $Co(Al, Cr)_2O_4$ powder. An example of the Co-Ni-Ti-Zn-based inorganic pigment powders is $(Co, Ni, Zn)_2TiO_4$ powder.

Examples of the brown inorganic pigment powders containing Fe include Fe-Zn-based inorganic pigment powders. An example of the Fe-Zn-based inorganic pigment powders is $(Zn, Fe)Fe_2O_4$ powder.

Examples of the black inorganic pigment powders containing Cu include Cu-Cr-based inorganic pigment powders and Cu-Fe-based inorganic pigment powders. Examples of the Cu-Cr-based inorganic pigment powders include $Cu(Cr, Mn)_2O_4$ powder and Cu-Cr-Mn powder. An example of the Cu-Fe-based inorganic pigment powders is Cu-Fe-Mn powder.

Examples of the other color pigment include pearlish pigments.

The extender pigment is an inorganic pigment powder different from a color pigment and inorganic beads. The type of the extender pigment is not particularly limited, but examples that can be used include scaly, acicular, and spherical inorganic pigment powders. Examples of the extender pigment include potassium carbonate, potassium titanate, kaolin, talc, and mica. The extender pigment may be used as a single type or in combination of two or more types.

So long as the effects of the present invention can be exerted, the coating layer 3 may consist of two or more layers.

From the viewpoint of exerting the effects of the present invention and concurrently increasing the antifouling property of the top plate 1, the coating layer 3 preferably further contains an antifouling layer provided on the inorganic layer 4. Herein, the "antifouling property" refers to the ease of removal of dirt, such as sticking char.

The antifouling layer to be preferably used is, for example, an antifouling layer containing a multiple oxide of silicon and zirconium, a multiple oxide of silicon and titanium, a multiple oxide of silicon and aluminum, a silicon oxide, a zirconium oxide, a titanium oxide, an aluminum oxide, a mixture of a silicon oxide and a zirconium oxide, a silicon oxide and a titanium oxide, silicone resin, modified silicone resin or fluorine-contained resin. From the viewpoint of further exerting the effects of the present invention, an antifouling layer containing a silicon oxide is particularly preferably used.

Furthermore, for example, as to the surface having relatively high arithmetic mean roughness Ra and root-mean-square roughness Rq, a layer made of the same material as the above antifouling layer may be formed as a protective layer on the surface, which enables the arithmetic mean roughness Ra and the root-mean-square roughness Rq to be controlled to desired degrees and, as a result, enables the effects of the present invention to be exerted. Also in the case where the protective layer is formed, it is particularly preferably a protective layer containing a silicon oxide. Moreover, the coating layer 3 may further contain an inorganic layer formed on the inorganic layer 4 to control the arithmetic mean roughness Ra and the root-mean-square roughness Rq to desired degrees. In this case, the outermost inorganic layer is preferably free of inorganic beads. Furthermore, the surface of the coating layer 3 may be polished to control the arithmetic mean roughness Ra and the root-mean-square roughness Rq to desired degrees. Examples of the method for polishing the surface of the coating layer 3 include a physical polishing method and a chemical polishing method. Examples of the physical polishing method include: the method of polishing the surface for a certain time with a polisher using a polish slurry or the like and then cleaning it; and the method of polishing the surface for a certain time with a cloth, a sponge or the like using a polish paste or the like and then cleaning it. Examples of the chemical polishing method include: the method of applying an aqueous solution containing hydrogen fluoride or the like to the surface of the inorganic layer 4, allowing the surface to stand for a certain time, and then cleaning the surface; the method of immersing the entire top plate 1 into an aqueous solution containing hydrogen fluoride or the like, allowing it to stand for a certain time, then picking it up, and cleaning it; and the method of spraying vapor of an aqueous solution containing hydrogen fluoride or the like onto the surface of the inorganic layer 4, allowing the surface to stand for a certain time, and then cleaning the surface.

From the viewpoint of increasing the design quality of the top plate 1, the coating layer 3 may further contain a decorative layer or the like provided on the inorganic layer. From the viewpoint of reducing the number of production steps, any layer may not be further provided on the inorganic layer.

In the top plate 1, the 20° gloss value of the surface of the coating layer 3 is preferably not more than 38, more preferably not more than 30, even more preferably not more than 23, and particularly preferably not more than 15. When the 20° gloss value is not more than the above upper limit, a highly matte appearance can be achieved. The lower limit is not particularly limited, but is, for example, not less than 1. From the viewpoint of achieving a high-quality appearance while enhancing the matte appearance, the lower limit is preferably not less than 2 and more preferably not less than 5.

In the top plate 1, the 60° gloss value of the surface of the coating layer 3 is preferably not more than 70, more preferably not more than 65, even more preferably not more than 60, and particularly preferably not more than 55. When the 60° gloss value is not more than the above upper limit, a highly matte appearance can be achieved. The lower limit is not particularly limited, but is, for example, not less than 20. From the viewpoint of achieving a high-quality appearance while

enhancing the matte appearance, the lower limit is preferably not less than 30 and more preferably not less than 40.

The cooker top plate 1 can be manufactured, for example, by the following manufacturing method.

First, a paste for forming an inorganic layer 4 is prepared to contain glass beads and a glass frit. Next, the paste for forming an inorganic layer 4 is applied to a surface of the glass substrate 2 which will serve as a cooking surface 2a, dried, and baked.

As the method for applying the paste for forming an inorganic layer 4, any known application method, such as, for example, screen printing, ink-jet printing or spraying, can be used. The drying temperature of the paste for forming an inorganic layer 4 may be, for example, a temperature not lower than 50°C and not higher than 150°C. The drying time of the paste for forming an inorganic layer 4 may be, for example, not less than five seconds and not more than 50 hours. The baking temperature of the paste for forming an inorganic layer 4 may be, for example, a temperature not lower than 600°C and not higher than 950°C. The baking time of the paste for forming an inorganic layer 4 may be, for example, not less than ten minutes and not more than two hours. When the baking temperature and the baking time for the inorganic layer 4 are not more than the above upper limits and not less than the above lower limits, the surface shape of the coating layer 3 can be easily adjusted to a desired degree and, therefore, the stain resistance and the scratch resistance can be easily increased while the matte appearance can be enhanced. In the case where an additional layer (for example, an antifouling layer or a protective layer) is further formed on the inorganic layer 4 in the coating layer 3, a paste for forming the additional layer may be applied to the inorganic layer 4 using any known application method, such as screen printing, ink-jet printing or spraying. The baking temperature of a paste for forming an antifouling layer and a paste for forming a protective layer may be, for example, not lower than 400°C and not higher than 800°C, and the baking time thereof may be, for example, not less than five seconds and not more than 50 hours. When the baking temperature and the baking time for the antifouling layer and the protective layer are not more than the above upper limits and not less than the above lower limits, the surface shape of the coating layer 3 can be easily adjusted to a desired degree and, therefore, the stain resistance and the scratch resistance can be easily increased while the matte appearance can be enhanced.

In the above manner, the cooker top plate 1 can be manufactured.

Although the description in the first embodiment described so far has been given of, as shown in Fig. 1, a structure of the cooker top plate when including a glass substrate and a coating layer disposed on a cooking surface of the glass substrate, a shield layer may be disposed on the back surface of the glass substrate in the cooker top plate according to the present invention.

Furthermore, in the above cooker top plate in which the coating layer is disposed on the cooking surface of the glass substrate, the coating layer may be disposed over the entire cooking surface of the glass substrate or may be partially disposed on the cooking surface. Moreover, the entire coating layer may have a single-layered structure or a multiple-layered structure or a portion of the coating layer may have a single-layered structure or a multiple-layered structure.

Also in the case where no coating layer is disposed on the cooking surface of the glass substrate, the effects of the present invention can be exerted so long as the root-mean-square roughness Rq and the arithmetic mean roughness Ra of the cooking surface are strictly controlled. In this case, for example, the root-mean-square roughness Rq of the cooking surface is 0.25 to 0.95 $\mu$m. The arithmetic mean roughness Ra of the cooking surface is 0.3 to 0.8 $\mu$m. The previously described method for polishing the surface of the coating layer can be applied to the method for controlling the surface state of the cooking surface.

[Examples]

Hereinafter, a description will be given in further detail of the present invention with reference to examples. However, the following examples are merely illustrative. The present invention is not at all limited by the following examples.

The following glass substrates were prepared.

Clear crystallized glass sheet ("N-0" manufactured by Nippon Electric Glass Co., Ltd., average coefficient of linear thermal expansion at 30°C to 750°C: $0.5 \times 10^{-7}$/°C, thickness: 4 mm)

White crystallized glass sheet ("N-11" manufactured by Nippon Electric Glass Co., Ltd., average coefficient of linear thermal expansion at 30°C to 750°C: $13 \times 10^{-7}$/°C, thickness: 4 mm)

The following materials for a coating layer were prepared.

<Glass Matrix>

Glass frit

"Frit NPF" manufactured by Nippon Electric Glass Co., Ltd. (average particle diameter: 3.5 $\mu$m, softening point: 660°C, borosilicate-based glass)

"Frit NPF10" manufactured by Nippon Electric Glass Co., Ltd. (average particle diameter: 1 $\mu$m, softening point:

660°C, borosilicate-based glass)

"Fine-Grained Frit NPF" manufactured by Nippon Electric Glass Co., Ltd. (average particle diameter: 1.5 μm, softening point: 660°C, borosilicate-based glass)

<Inorganic Beads>

Glass beads

"UBS-0010E" manufactured by Unitika Ltd. (average particle diameter: 6.1 μm, softening point: 850°C, aluminoborosilicate-based glass)

"UBS-K0005E" manufactured by Unitika Ltd. (average particle diameter: 3.3 μm, softening point: 850°C, aluminoborosilicate-based glass)

Alumina beads

"DAW-01" manufactured by Denka Co., Ltd. (average particle diameter: 1.9 μm, softening point (melting point): over 1000°C)

Silica beads

"FB-3SDC" manufactured by Denka Co., Ltd. (average particle diameter: 3.1 μm, softening point (melting point): 1650°C)

<Resin Binder>

(Example 1)

A glass frit ("Frit NPF" manufactured by Nippon Electric Glass Co., Ltd.), glass beads ("UBS-0010E" manufactured by Unitika Ltd.), and a resin binder were mixed to give a mass ratio (glass frit to glass beads to resin binder) of 9:1:7.7, thus preparing a paste for forming an inorganic layer. Next, the paste for forming an inorganic layer was screen printed on a cooking surface of a clear crystallized glass sheet ("N-0" manufactured by Nippon Electric Glass Co., Ltd.) to have a thickness of 3.5 μm after being fired. Subsequently, the paste was dried by the application of heat at 80°C for one minute and then fired at 800°C for 30 minutes, thus forming an inorganic layer (a coating layer). The resin binder was fully volatilized by the drying by the application of heat. Table 1 describes the respective contents of components in the inorganic layer after the drying and firing. Furthermore, Figs. 2 and 3 show scanning electron microscopic images of cross sections of obtained cooker top plates.

(Examples 2 to 7 (Ex. 2 to Ex. 7), Examples 9 to 10 (Ex. 9 to Ex. 10) and Comparative Examples 1 to 2 (CEx. 1 to CEx. 2))

Cooker top plates were obtained in the same manner as in Example 1 except that the content ratio among components in the inorganic layer was changed to those described in Table 1 below.

(Example 8 (Ex. 8))

The paste for forming an inorganic layer for use in Example 3 was screen printed on a cooking surface of a white crystallized glass sheet ("N-11" manufactured by Nippon Electric Glass Co., Ltd.) to have a thickness of 3.5 μm after being fired. Subsequently, the paste was dried by the application of heat at 80°C for one minute and then fired at 800°C for 30 minutes, thus forming an inorganic layer. The resin binder was fully volatilized by the drying by the application of heat. Thereafter, a paste for forming an antifouling layer containing a silicon oxide and a zirconium oxide at a mass ratio of 1:9 was screen printed on the inorganic layer. Subsequently, the paste was fired at 600°C for 20 minutes, thus forming an antifouling layer. At the time, the thickness of the antifouling layer after the firing was 0.03 to 0.15 μm.

(Example 11 (Ex. 11))

A cooker top plate was obtained in the same manner as in Example 8 except that the paste for an antifouling layer was changed to one containing a silicon oxide in a content of 100% by mass.

(Example 12 (Ex. 12))

A cooker top plate was obtained in the same manner as in Example 8 except that the paste for an antifouling layer was changed to one containing silicone resin in a content of 100% by mass.

(Examples 13 to 14 (Ex. 13 to Ex. 14))

Cooker top plates were obtained in the same manner as in Example 8 except that the paste for forming an inorganic layer was changed to the same paste as in Comparative Example 2 and the paste for forming a protective film was changed to one containing a silicon oxide in a content of 100% by mass. The thickness of the protective layer in Example 13 after the firing was 4 to 6 μm, and the thickness of the protective layer in Example 14 after the firing was 0.05 to 0.15 μm.

(Example 15 (Ex. 15))

The paste for forming an inorganic layer for use in Example 10 was screen printed on a cooking surface of a white crystallized glass sheet ("N-11" manufactured by Nippon Electric Glass Co., Ltd.) to have a thickness of 4.9 μm after being fired. Subsequently, the paste was dried by the application of heat at 80°C for one minute and then fired at 800°C for 30 minutes, thus forming an inorganic layer. The resin binder was fully volatilized by the drying by the application of heat. Thereafter, a paste made of a mixture of a glass frit ("Frit NPF" manufactured by Nippon Electric Glass Co., Ltd.) and a resin binder was further screen printed on the inorganic layer. Subsequently, the paste was dried by the application of heat at 80°C for one minute and then fired at 800°C for 30 minutes, thus further forming a second inorganic layer on the inorganic layer. In doing so, the sum of the thicknesses of the first inorganic layer and the second inorganic layer after the firing was 7.7 μm. With 100% by mass representing the total content of the first and second inorganic layers, the content of glass was 94% by mass and the content of silica beads was 6% by mass.

The cooker top plates in Examples 1 to 15 and Comparative Examples 1 to 2 were evaluated in terms of the evaluation items (1) to (3) and (5) below. Furthermore, the cooker top plates in Examples 8, 11, and 12 were further evaluated in terms of the evaluation item (4) below.

[Evaluations]

(1) 20° Gloss Value and 60° Gloss Value of Surface of Coating Layer

The obtained cooker top plates were evaluated in terms of 20° gloss value and 60° gloss value of the surface of the coating layer in conformity with JIS K5600-5-4 (1999) with IG-331 manufactured by HORIBA, Ltd.

(2) Light Transmittance of Cooker Top Plate (Coating Layer)

The obtained cooker top plates were measured in terms of light transmittance through the back surface of the glass substrate at a wavelength of 580 nm, with a spectrophotometer ("V-770" manufactured by JASCO Corporation).

(3) Stain resistance and Scratch Resistance of Surface of Coating Layer

First, clay and sand were put into a stainless steel pot having a bottom surface with a 200±10 mm diameter to adjust the total weight to 2.0 kg. Next, the operation of moving the stainless steel pot back and forth over 50 mm on the coating layer at a speed of approximately 1 m/s while bringing the bottom of the stainless steel pot into contact with the coating layer was repeated 100 times. Thereafter, the coating layer was visually observed to evaluate it in terms of the degree of dirt having stuck to the coating layer due to the scraped pot bottom (the stain resistance) and the degree of scratches generated on the coating layer due to friction against the pot bottom (the scratch resistance) according to the criteria below. Furthermore, the above stainless steel pot was changed to an enameled pot, clay and sand were put into the enameled pot to adjust the total weight to 2.5 kg, and the same operation and evaluation as described above were done.

<Stain resistance>

O: No visible dirt stuck from the pot to the top plate.
Δ: Slight visible dirt stuck from the pot to the top plate.

X: Dirt significantly decreasing the design quality stuck from the pot to the top plate.

<Scratch Resistance>

O: No visible scratch was generated.
Δ: Slight visible scratches were generated.
X: Scratches significantly decreasing the design quality were generated.

(4) Antifouling Property of Antifouling Layer

Antifouling property test 1 below was conducted as for Example 8 and Antifouling property test 2 below was conducted as for Examples 11 to 12.

(4-1) Antifouling Property Test 1

First, 1 g of commercially available grilled meat sauce was dropped onto the antifouling layer (the cooking surface) of the obtained cooker top plate and spread in a thin layer thereon. Next, the top plate was heated for 30 minutes in an electric furnace at 250°C, taken out of the furnace, and naturally cooled at room temperature, thus allowing charred grilled meat sauce to stick to the surface of the antifouling layer. Subsequently, the top plate was immersed into water at 20°C for 10 minutes and picked up, and water on the top plate was wiped off with a rag. Finally, the top plate was placed on a workbench through a slip-proof mat laid thereon, a distal end of a chopstick was rubbed 10 horizontal strokes against sticking char on the top plate while the distal end of the chopstick was applied at an angle of 45 degrees to the top plate and 750 g of load was imposed on the chopstick, and the degree of removal of sticking char was then evaluated according to the following criteria.

O: Sticking char could be removed.
X: Sticking char could not be removed.

(4-2) Antifouling Property Test 2

A top plate with charred grilled meat sauce sticking to the surface of the antifouling layer was prepared in the same manner as in Antifouling property test 1 above. The top plate was immersed into water at 20°C for 10 minutes and picked up, and water on the top plate was wiped off with a rag. Subsequently, the top plate was secured to the table of a frictional tester, a lap with a glass top cleaner (AD-KZ063 manufactured by Nipro) applied thereto was pressed against the surface of the top plate, and rubbed 50 horizontal strokes against sticking char on the top plate with 200 kg of load imposed on the lap from above, and the degree of removal of sticking char was then evaluated according to the following criteria.

O: Sticking char could be removed.
X: Sticking char could not be removed.

(5) State of Protrusion of Inorganic Beads

Whether or not inorganic beads were protruding from the surface of each of the obtained cooker top plates was confirmed with a scanning electron microscope.

O: No protruding inorganic beads were found.
X: Inorganic beads were protruding.

[Table 1]

| | | | Unit | Ex. 1 | Ex. 2 | Ex. 3 | Ex. 4 | Ex. 5 | Ex. 6 | Ex. 7 | Ex. 9 | Ex. 1 0 | Comp. Ex. 1 | Comp. Ex. 2 |
|---|---|---|---|---|---|---|---|---|---|---|---|---|---|---|
| Inorganic Layer | Glass frit | Frit NPF | % by mass | 90 | 80 | 0 | 0 | 90 | 80 | 98 | 80 | 80 | 90 | 50 |
| | | Frit NPF10 | | 0 | 0 | 0 | 0 | 0 | 0 | 0 | 0 | 0 | 10 | 0 |
| | | Fine-Grained Frit NPF | | 0 | 0 | 80 | 60 | 0 | 0 | 0 | 0 | 0 | 0 | 0 |
| | Glass beads | UBS－0010E | | 10 | 20 | 20 | 40 | 0 | 0 | 2 | 0 | 0 | 0 | 50 |
| | | UBS－K0005E | | 0 | 0 | 0 | 0 | 10 | 20 | 0 | 0 | 0 | 0 | 0 |
| | Alumina beads | DAW-01 | | 0 | 0 | 0 | 0 | 0 | 0 | 0 | 20 | 0 | 0 | 0 |
| | Silica beads | FB-3SDC | | 0 | 0 | 0 | 0 | 0 | 0 | 0 | 0 | 20 | 0 | 0 |
| | Inorganic beads/Glass frit | | – | 0.11 | 0.25 | 0.25 | 0.67 | 0.11 | 0.25 | 0.02 | 0.25 | 0.25 | 0 | 1 |
| Evaluations | State of protrusion of inorganic beads | | – | ○ | ○ | ○ | ○ | ○ | ○ | ○ | × | × | ○ | ○ |
| | Arithmetic mean roughness Ra | | μm | 0.29 | 0.36 | 0.32 | 0.38 | 0.30 | 0.29 | 0.23 | 0.35 | 0.49 | 0.21 | 0.92 |
| | Root-mean-square roughness Rq | | μm | 0.39 | 0.46 | 0.40 | 0.44 | 0.37 | 0.42 | 0.27 | 0.41 | 0.67 | 0.01 | 1.25 |
| | Transmittance @580nm | | % | 87 | 87 | 87 | 81 | 87 | 87 | 88 | 83 | 85 | 87 | - |
| | 60° gloss value | | – | 54 | 43 | 46 | 25 | 62 | 54 | 68 | 49 | 18 | 71 | 8 |
| | 20° gloss value | | – | 17 | 11 | 12 | 3 | 24 | 16 | 31 | 12 | 1 | 39 | 0 |
| | Mohs hardness | | – | 5 | 6 | 6 | 6 | 5 | 6 | 5 | 6 | 6 | 5 | - |
| | Stainless steel pot (dirt) | | – | ○ | ○ | ○ | ○ | ○ | ○ | △ | △ | ○ | × | × |
| | Stainless steel pot (scratches) | | – | ○ | ○ | ○ | ○ | ○ | ○ | ○ | △ | △ | ○ | × |
| | Enameled pot (dirt) | | – | ○ | ○ | ○ | ○ | ○ | ○ | △ | △ | ○ | △ | × |
| | Enameled pot (scratches) | | – | ○ | ○ | ○ | ○ | ○ | ○ | ○ | △ | △ | ○ | × |

[Table 2]

| | | | Ex. 8 | Ex.11 | Ex.12 | Ex.13 | Ex.14 | Ex.15 |
|---|---|---|---|---|---|---|---|---|
| Evaluations | State of protrusion of inorganic beads | – | ○ | ○ | ○ | ○ | ○ | ○ |
| | Arithmetic mean roughness Ra | μm | 0.27 | 0.51 | 0.50 | 0.68 | 0.62 | 0.51 |
| | Root-mean-square roughness Rq | μm | 0.34 | 0.66 | 0.63 | 0.92 | 0.83 | 0.66 |
| | Transmittance @580nm | % | 0 | 0 | 0 | 0 | 0 | 0 |
| | 60° gloss value | – | 56 | 29 | 38 | 15 | 22 | 52 |
| | 20° gloss value | – | 17 | 3 | 6 | 1 | 1 | 12 |
| | Mohs hardness | – | – | – | – | – | – | – |
| | Stainless steel pot (dirt) | – | ○ | ○ | ○ | △ | △ | △ |
| | Stainless steel pot (scratches) | – | ○ | ○ | ○ | ○ | ○ | ○ |
| | Enameled pot (dirt) | – | ○ | ○ | ○ | ○ | ○ | ○ |
| | Enameled pot (scratches) | – | ○ | ○ | ○ | ○ | ○ | ○ |
| | Antifouling property test① | – | ○ | – | – | - | - | - |
| | Antifouling property test② | – | – | ○ | ○ | - | - | - |

As is obvious from Tables 1 and 2, the top plates in Examples 1 to 15 in which the coating layer contained an inorganic layer and the root-mean-square roughness Rq of the surface of the coating layer was 0.1 μm to 1 μm had a highly matte appearance and exhibited high stain resistance and scratch resistance. Furthermore, as compared to Comparative Examples 1 and 2 in which the root-mean-square roughness Rq of the surface of the coating layer was not 0.1 μm to 1 μm, the top plates in Examples 1 to 15 had an excellent matte appearance and exhibited higher stain resistance and scratch resistance. Also in Examples 8, 11, and 12 in which an antifouling layer was further formed on the inorganic layer, the arithmetic mean roughness Ra and the root-mean-square roughness Rq could be controlled to desired degrees, these top plates had an excellent matte appearance, excellent stain resistance, and excellent scratch resistance and could be increased in antifouling property. Also in Examples 13 and 14 in which a protective layer was further formed on the inorganic layer having a large arithmetic mean roughness Ra and a large root-mean-square roughness Rq, the arithmetic

mean roughness Ra and the root-mean-square roughness Rq could be controlled to desired degrees, and these top plates could be enhanced in matte appearance and increased in stain resistance and scratch resistance. Also in Example 15 in which an inorganic layer made of a glass frit was further formed on an inorganic layer made of a glass frit and inorganic beads, the arithmetic mean roughness Ra and the root-mean-square roughness Rq could be controlled to desired degrees, and these top plates could be enhanced in matte appearance and increased in stain resistance and scratch resistance.

As is obvious from Fig. 2, in the top plate in Example 2, the glass beads (inorganic beads) did not protrude from the surface of the coating layer and were present in an approximately spherical shape in the coating layer. Furthermore, it was confirmed from Fig. 3 that in the top plate in Example 10 silica beads (inorganic beads) were protruding on the surface of the coating layer.

[Reference Signs List]

1 cooker top plate
2 glass substrate
2a cooking surface
2b back surface
3 coating layer
4 inorganic layer
5 inorganic bead

**Claims**

**1.** A cooker top plate comprising:

a glass substrate having a cooking surface on which a cooking utensil is to be put and a back surface on an opposite side to the cooking surface; and
a coating layer disposed on the cooking surface side of the glass substrate,
wherein the coating layer contains an inorganic layer, and
a surface of the coating layer has a root-mean-square roughness Rq of 0.1 μm to 1 μm.

**2.** The cooker top plate according to claim 1, wherein the inorganic layer contains inorganic beads.

**3.** The cooker top plate according to claim 2, wherein the surface of the coating layer has an arithmetic mean roughness Ra of 0.22 μm to 0.9 μm.

**4.** The cooker top plate according to claim 2 or 3, wherein the inorganic beads contain at least one type of inorganic beads selected from the group consisting of glass beads, alumina beads, silica beads, zirconia beads, quartz beads, feldspar beads, zeolite beads, corundum beads, and zircon beads.

**5.** The cooker top plate according to claim 2 or 3, wherein the inorganic beads are kept from protruding from the surface of the coating layer.

**6.** The cooker top plate according to claim 2 or 3, wherein

the inorganic layer contains a glass matrix, and
a difference in softening point from the inorganic beads to the glass matrix is not more than 300°C.

**7.** The cooker top plate according to claim 2 or 3, wherein the inorganic layer contains a glass matrix having a different refractive index from the inorganic beads.

**8.** The cooker top plate according to claim 2 or 3, wherein the inorganic layer is free of color pigment.

**9.** The cooker top plate according to claim 2 or 3, wherein the coating layer further contains an antifouling layer and/or a protective layer provided on the inorganic layer.

**10.** The cooker top plate according to claim 1 or 2, wherein the surface of the coating layer has a 20° gloss value of not more than 38.

**11.** The cooker top plate according to claim 1 or 2, wherein the surface of the coating layer has a 60° gloss value of not more than 70.

**12.** A cooker top plate comprising a glass substrate having a cooking surface on which a cooking utensil is to be put and a back surface on an opposite side to the cooking surface, the cooking surface having a root-mean-square roughness Rq of 0.25 μm to 0.95 μm.

**13.** A method for manufacturing the cooker top plate according to claim 1 or 2,

the method comprising the step of applying a paste for forming an inorganic layer, the paste containing inorganic beads, to a surface of a glass substrate and firing the paste to form a coating layer containing an inorganic layer on the surface of the glass substrate,
wherein a surface of the coating layer has a root-mean-square roughness Rq of 0.1 μm to 1 μm.

[FIG. 1]

1
5
2 a
3 (4)
2
2 b

[FIG. 2]

5
3 (4)
2
15.0kV 10.1mm x5.00k BSECOMP 30Pa 2023/10/11
10.0um

[FIG. 3]

3 (4)
2
5

## INTERNATIONAL SEARCH REPORT

International application No.
**PCT/JP2024/031885**

### A. CLASSIFICATION OF SUBJECT MATTER

***H05B 6/12***(2006.01)i; ***C03C 17/04***(2006.01)i; ***C03C 17/34***(2006.01)i; ***C03C 17/42***(2006.01)i; ***F24C 15/10***(2006.01)i
FI: H05B6/12 305; C03C17/04 A; C03C17/34 Z; C03C17/42; F24C15/10 B

According to International Patent Classification (IPC) or to both national classification and IPC

### B. FIELDS SEARCHED

Minimum documentation searched (classification system followed by classification symbols)

H05B6/12; C03C17/04; C03C17/34; C03C17/42; F24C15/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2013-082615 A (SCHOTT AG) 09 May 2013 (2013-05-09) paragraphs [0015]-[0162], fig. 1-7 | 1-8, 10-11, 13<br>9 |
| Y | JP 3191567 U (SCHOTT AG) 03 July 2014 (2014-07-03) paragraphs [0170]-[0171] | 9 |
| X | JP 2007-170754 A (NIPPON ELECTRIC GLASS CO., LTD.) 05 July 2007 (2007-07-05) paragraph [0082], fig. 1 | 12 |
| A | JP 2005-298266 A (NIPPON ELECTRIC GLASS CO., LTD.) 27 October 2005 (2005-10-27) entire text, all drawings | 1-11, 13 |
| A | JP 2005-049050 A (NARUMI CHINA CORP.) 24 February 2005 (2005-02-24) entire text, all drawings | 1-11, 13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 October 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**

International application No.
**PCT/JP2024/031885**

**C. DOCUMENTS CONSIDERED TO BE RELEVANT**

| Category* | Citation of document, with indication, where appropriate, of the relevant passages | Relevant to claim No. |
|---|---|---|
| A | US 2020/0317560 A1 (SCHOTT AG, SCHOTT CORPORATION) 08 October 2020 (2020-10-08) entire text, all drawings | 1-11, 13 |
| A | JP 2023-520353 A (EUROKERA S.N.C.) 17 May 2023 (2023-05-17) entire text, all drawings | 12 |

Form PCT/ISA/210 (second sheet) (July 2022)

**INTERNATIONAL SEARCH REPORT**
**Information on patent family members**

International application No.
**PCT/JP2024/031885**

| Patent document cited in search report | Publication date (day/month/year) | Patent family member(s) | Publication date (day/month/year) |
|---|---|---|---|
| JP 2013-082615 A | 09 May 2013 | US 2013/0273320 A1 paragraphs [0013]-[0180], fig. 1-7 | |
| | | EP 2592056 A1 | |
| | | DE 102011115379 A1 | |
| | | CN 103030303 A | |
| JP 3191567 U | 03 July 2014 | US 2014/0178642 A1 paragraphs [0193]-[0197] | |
| | | DE 202012012372 U1 | |
| | | ES 1137356 U | |
| JP 2007-170754 A | 05 July 2007 | (Family: none) | |
| JP 2005-298266 A | 27 October 2005 | (Family: none) | |
| JP 2005-049050 A | 24 February 2005 | (Family: none) | |
| US 2020/0317560 A1 | 08 October 2020 | EP 3718981 A2 | |
| JP 2023-520353 A | 17 May 2023 | US 2023/0150083 A1 | |
| | | WO 2021/191161 A1 | |
| | | EP 4126780 A1 | |
| | | FR 3108326 A1 | |
| | | CN 115279708 A | |
| | | KR 10-2023-0008023 A | |
| | | ES 2974675 T3 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008190846 A
- JP 2008290917 A